# EUROPÄISCHE PATENTSCHRIFT

(11) **EP 1 553 811 B1**
(45) Veröffentlichungstag und Bekanntmachung des Hinweises auf die Patenterteilung: **27.09.2006**
(21) Anmeldenummer: 04029902.6
(22) Anmeldetag: 16.12.2004
(51) Int. Cl.: H05B 41/28, H02M 1/00

(54) **Schaltungsanordnung zum Betrieb von Lichtquellen mit Leistungsfaktorkorrektur**
Circuit arrangement for operating light sources with power factor correction
Dispositif d'alimentation de sources lumineuses avec correction du facteur de puissance

(30) Priorität: 09.01.2004 DE 102004001617
(43) Veröffentlichungstag der Anmeldung: 13.07.2005
(73) Patentinhaber: Patent-Treuhand-Gesellschaft für elektrische Glühlampen mbH, 81543 München (DE)
(72) Erfinder: Hoo, Henry, 730788 Singapore (SG); Liu, Ken, c/o Osram Foshan Lighting Co., Ltd., Foshan Guang dong (CN); Schmitt, Harald, 80689 München (DE); Twardzik, Rene, 83301 Traunreut (DE)

(56) Entgegenhaltungen:
- WO-A-02/47441
- US-B1- 6 316 883
- CHAE G ET AL: "HIGH POWER FACTOR CORRECTION CIRCUIT USING VALLEY CHARGE-PUMPING FOR LOW COST ELECTRONIC BALLASTS" PESC '98. RECORD OF THE 29TH ANNUAL IEEE POWER ELECTRONICS SPECIALISTSCONFERENCE. FUKUOKA, MAY 18 - 21, 1998, PESC. ANNUAL POWER ELECTRONICS SPECIALISTS CONFERENCE, NEW YORK, NY : IEEE, US, Bd. VOL. 2, 18. Mai 1998 (1998-05-18), Seiten 2003-2008, XP001004384 ISBN: 0-7803-4490-1
- DALLA COSTA M A ET AL: "An analysis about valley fill filters applied to electronic ballasts" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, Bd. VOL. 3 OF 3. CONF. 29, 2. November 2003 (2003-11-02), Seiten 509-514, XP010693564 ISBN: 0-7803-7906-3

## Beschreibung

### Technisches Gebiet

Die Erfindung betrifft Schaltungsanordnungen zum Betrieb von Lichtquellen. Insbesondere betrifft die Erfindung Schaltungsanordnungen für die Leistungsversorgung von Lichtquellen aus einem Versorgungsnetz, die geeignet sind, um einen netzseitigen Leistungsfaktor zu korrigieren. Im folgenden wird für den Ausdruck Leitungsfaktorkorrektur die Abkürzung PFC verwendet, die sich an den englischsprachigen Ausdruck "Power Factor Correction" anlehnt.

Eine speisende Netzspannung weist eine Netzfrequenz auf. Der Ausdruck "hochfrequent" wird im folgenden für Frequenzen verwendet, die wesentlich höher sind als die Netzfrequenz.

### Stand der Technik

Aus der Schrift WO 02/47441 (Hu) ist eine o. g. Schaltungsanordnung bekannt. In dieser Schrift werden zwei PFC Technologien offenbart: Eine Ladungspumpe ("single feedback") und eine sog. Valley-Fill-Schaltung ("double pump"). Dabei ist die Ladungspumpe der Valley-Fill-Schaltung von der Netzspannung aus gesehen vorgeschaltet. Zudem sind Ladungspumpe und Valley-Fill-Schaltung von der gleichen hochfrequenten Spannungsquelle gespeist.

Ladungspumpen sind z. B. aus der Schrift US 4,949,013 (Zuchtriegel) bekannt. Wesentliches Merkmal einer Ladungspumpe ist die Verschaltung eines Gleichrichterausgangs mit einer Pumpdiode. An die entstehende Verbindungsstelle ist eine hochfrequente Spannung angelegt, die einem Lastkreis entnommen wird. Es soll an dieser Stelle betont werden, dass nur ein Gleichrichterausgang mit einer Pumpdiode verschaltet ist, weshalb dieser Teil der Schaltungsanordnung in WO 02/47441 (Hu) "single feedback" genannt wird.

Valley-Fill-Schaltungen sind z. B. aus der Schrift WO 90/09087 (Skalak) bekannt. Dabei handelt es sich um eine passive PFC-Schaltung aus zwei Speicherkondensatoren und drei Dioden, die zwischen zwei Gleichrichterausgänge geschaltet wird. Die Wirkungsweise der Valley-Fill-Schaltung liegt darin begründet, dass die Speicherkondensatoren über die Dioden so verschaltet sind, dass sie von einer Netzspannung als Serienschaltung geladen werden, jedoch von einer Last als Parallelschaltung entladen werden.

Eine Valley-Fill-Schaltung kann durch Aufspaltung einer ihrer Dioden in zwei Dioden eingeschränkt auch als Ladungspumpe wirken. Dazu ist an die Verbindungsstelle der zwei durch Aufspaltung entstandenen Dioden eine hochfrequente Wechselspannung anzulegen. In der Schrift US 6,316,883 (Cho) ist eine derartig modifizierte Valley-Fill-Schaltung beschrieben. Das dort beschriebene Betriebsgerät für Entladungslampen weist zusätzlich auch eine separate Ladungspumpe auf. Diese Ladungspumpe ist der Valley-Fill-Schaltung von der Netzspannungsseite gesehen nachgeschaltet, wodurch ein weiterer Speicherkondensator nötig ist.

In WO 02/47441 (Hu) ist die Ladungspumpe der Valley-Fill-Schaltung vorgeschaltet. Ein weiter Speicherkondensator ist damit nicht nötig. Die hochfrequente Wechselspannung, die in die Ladungspumpe eingespeist wird, ist aus der hochfrequenten Wechselspannung die der modifizierten Valley-Fill-Schaltung zugeführt wird abgeleitet.

Der Schrift WO 02/47441 (Hu) ist zu entnehmen, dass mit der dort beschrieben Schaltungsanordnung gute Werte für den Leistungsfaktor erreicht werden. Normen wie IEC 61000-3-2 schreiben jedoch zusätzlich Grenzwerte für Netzstrom-Oberschwingungen vor. Dabei wird unterschieden zwischen Lichtquellen, die bis zu 25 W Leistung der Netzspannung entnehmen und Lichtquellen, die mehr als 25W entnehmen. Über 25W sind die Anforderungen wesentlich höher; d.h. die Amplituden der Netzstrom-Oberschwingungen müssen wesentlich geringer sein.

Ein Gegenstand der Schrift WO 02/47441 (Hu) ist eine Kompakt-Leuchtstofflampe mit integriertem Betriebsgerät. Derartige Lampen sind bis zu einer vom Netz aufgenommenen Leistung von 25W marktüblich. Da bis 25W die Anforderungen von einschlägigen Normen an die Netzstrom-Oberschwingen gering sind, kann die in WO 02/47441 (Hu) offenbarte Schaltungsanordnung bis 25W einen mit den Normen konformen Betrieb von Leuchtstofflampen bewerkstelligen.

Die Anforderungen an eine Schaltungsanordnung zum Betrieb von Lichtquellen sind vielfältig. Folgende Anforderungen sind bei der Auslegung dieser Schaltungsanordnungen zu berücksichtigen:
- Niedriger netzseitiger Leitungsfaktor
- Niedriger Klirrfaktor (Total Harmonic Distortion: THD) des vom Netz aufgenommenen Stroms
- Normgerechte Netzstromoberschwingungen
- Hoher Wirkungsgrad
- Niedriger Crest-Faktor des Stroms durch die Lichtquelle
- Geringe Funkstörungen
- Geringe Kosten
- Geringe geometrische Abmessungen

Zum Betrieb von Leuchtstofflampen mit einer vom Netz aufgenommenen Leistung bis 25W stellt die in WO 02/47441 (Hu) offenbarte Schaltungsanordnung einen guten Kompromiss dar, um den o. g. Anforderungen gerecht zu werden. Über 25W stellt jedoch das Einhalten der einschlägigen Normen bezüglich der Netzstrom-Oberschwingungen ein Problem dar. Speziell für Leuchtstofflampen ist der Crest-Faktor des Lampenstroms durch Normen (z. B. IEC 60929) auf einen Maximalwert von 1,7 begrenzt. Das Einhalten dieses Grenzwerts bei vom Netz aufgenommener Leistung über 25W stellt ein zusätzliches Problem dar.

Eine Dimensionierung der in WO 02/47441 (Hu) offenbarten Schaltungsanordnung dahingehend, dass auch bei einer vom Netz aufgenommenen Leistung über 25W die Normen bezüglich der Netzstrom-Oberschwingungen eingehalten werden führt zu einer erheblich stärkeren Belastung von Bauelementen der Schaltungsanordnung. Dies führt zu einer Steigerung der Kosten, zu größeren geometrischen Abmessungen und zu einem reduzierten Wirkungsgrad.
Soll zusätzlich der Grenzwert für den Crest-Faktor des Lampenstroms nach IEC 60929 eingehalten werden, so werden die Bauteile noch stärker belastet.

### Darstellung der Erfindung

Es ist Aufgabe der vorliegenden Erfindung, eine Schaltungsanordnung zum Betrieb von Lichtquellen aufbauend auf die Topologie einer Schaltungsanordnung gemäß WO 02/47441 (Hu) derart weiterzubilden, dass auch bei einer vom Netz aufgenommenen Leistung über 25 W die Netzstromoberschwingungen normgerechte Werte aufweisen. Für den Betrieb von Leuchtstofflampen ist es zusätzlich Aufgabe der vorliegenden Erfindung einen normgerechten Lampenstrom-Crest-Faktor zu ermöglichen.

Diese Aufgabe wird durch eine Schaltungsanordnung zum Betrieb von Lichtquellen gelöst, die zusätzlich zu den Merkmalen die aus WO 02/47441 (Hu) bekannt sind, eine Ladungspumpe aufweist, die an den negativen Gleichrichterausgang angeschlossen ist,.

Die Erfindung wird in WO 02/47441 (Hu) nicht nahegelegt, da darin im Zusammenhang mit der Ladungspumpe ausdrücklich von einem "single feedback" (Seite 5/Zeile 3) die Rede ist, während in der vorliegenden Erfindung die Ladungspumpe doppelt ausgelegt ist, indem sie sowohl ein positiver, als auch ein negativer Gleichrichterausgang mit einem Pumpkondensator verbunden ist.

Die Valley-Fill-Schaltung ist eine PFC-Schaltung die keine erhebliche Mehrbelastung von Bauteilen hervorruft. Diese Mehrbelastung betrifft Bauteile wie z. B. Drosseln und elektronische Schalter und wird durch Strom- oder Spannungsüberhöhungen bedingt, die im Zusammenhang mit Blindleistungstransport entstehen. Allerdings können mit einer Valley-Fill-Schaltung alleine keine normgerechten Netzstrom-Oberschwingungen erzielt werden. Auch ein normgerechter Lampenstrom-Crest-Faktor ist nicht gegeben.

Mit einer Ladungspumpe ist es möglich normgerechte Netzstromoberschwingungen und einen normgerechten Lampenstrom-Crest-Faktor zu erzielen. Allerdings gehen mit einer Ladungspumpe Mehrbelastungen von Bauteilen einher. Üblich sind Ladungspumpen, die am positiven Gleichrichterausgang angeschlossen sind.

Die Kombination einer Valley-Fill-Schaltung mit einer Ladungspumpe bringt normgerechte Netzstromoberschwingungen und einen normgerechten Lampenstrom-Crest-Faktor bei nur geringen Mehrbelastungen von Bauteilen; dies jedoch nur bei einer vom Netz aufgenommenen Leistung bis 25 W.

Erfindungsgemäß wird deshalb die Ladungspumpe doppelt ausgeführt. D. h. sowohl mit dem positiven als auch mit dem negativen Gleichrichterausgang ist eine Ladungspumpe verbunden. Damit werden auch bei einer vom Netz aufgenommenen Leistung über 25 W normgerechte Netzstrom-Oberschwingungen und ein normgerechter Lampenstrom-Crest-Faktor bei nur geringen Mehrbelastungen von Bauteilen erreicht.

Eine besonders vorteilhafte Ausgestaltung der Erfindung ist dadurch gekennzeichnet, dass ein Inverter als Halbbrückeninverter ausgeführt ist. Der Inverter ist zwischen eine positive und eine negative Schiene geschaltet und wird dadurch mit einer Gleichspannung versorgt. An einem Inverterausgang stellt der Inverter eine hochfrequente Wechselspannung zum Betrieb von Lichtquellen zur Verfügung. Durch die Ausführung des Inverters als Halbbrückeninverter kann ein besonders hoher Wirkungsgrad der Schaltungsanordnung erzielt werden.

Eine weitere besonders vorteilhafte Ausgestaltung der Erfindung ist dadurch gekennzeichnet, dass ein Anschluss der Lichtquelle über einen Koppelkondensator mit der positiven oder negativen Schiene verbunden ist. Damit wird eine weitere Reduzierung der Netzstromoberschwingungen und des Lampenstrom-Crest-Faktors erreicht.

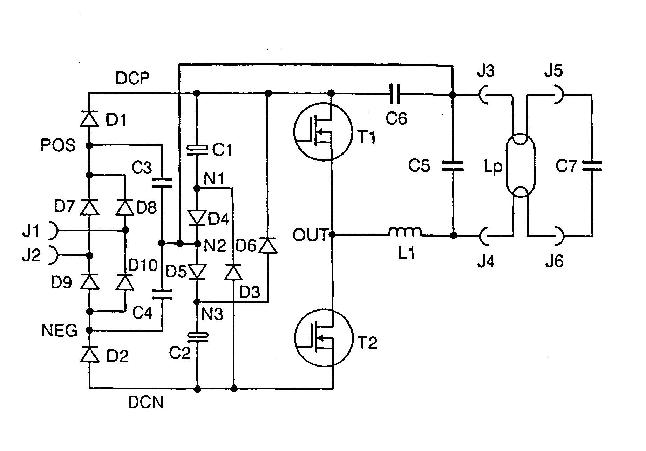

### Kurze Beschreibung der Zeichnung

Im folgenden soll die Erfindung anhand von Ausführungsbeispielen unter Bezugnahme auf eine Zeichnung näher erläutert werden. Die Figur zeigt ein Ausführungsbeispiel der Erfindung für eine Leuchtstofflampe mit Elektrodenwendeln.

Im folgenden werden Transistoren durch den Buchstaben T, Dioden durch den Buchstaben D, Kondensatoren durch den Buchstaben C, Drosseln durch den Buchstabe L und Anschlüsse durch den Buchstaben J jeweils gefolgt von einer Zahl bezeichnet.

### Bevorzugte Ausführung der Erfindung

In der Figur bilden die Anschlüsse J 1 und J2 den Netzspannungseingang. An J 1 und J2 ist eine Netzspannung anschließbar. J1 und J2 sind mit dem Eingang eines Gleichrichters verbunden. Dem Gleichrichter können auch noch Mittel zur Funkentstörung vorgeschaltet sein.

Im allgemeinen besteht der Gleichrichter aus einer bekannten Brückenschaltung der Gleichrichterdioden D7, D8, D9 und D10, die an ihrem positiven Gleichrichterausgang POS und an ihren negativen Gleichrichterausgang NEG die gleichgerichtete Netzspannung zur Verfügung stellt. Bedingt durch die Ladungspumpe müssen die Gleichrichterdioden hochfrequent schalten können. Es ist auch möglich langsame Gleichrichterdioden zu verwenden. Dann muss allerdings jeweils eine schnelle Diode zwischen die Brückenschaltung und den jeweiligen Gleichrichterausgang geschaltet werden.

Eine erste Diode D1, bei der es sich um eine Pumpdiode handelt, ist mit ihrer Anode mit dem positiven Gleichrichterausgang POS und mit ihrer Kathode mit einer positiven Schiene DCP verbunden.

Eine zweite Diode D2, bei der es sich ebenfalls um eine Pumpdiode handelt, ist mit ihrer Kathode mit dem negativen Gleichrichterausgang NEG und mit ihrer Anode mit einer negativen Schiene DCN verbunden.

Zwischen die positive DCP und die negative Schiene DCN ist die Serienschaltung einer dritten D3, einer vierten D4, einer fünften D5 und einer sechsten Diode D6 geschaltet, wobei jeweils die Kathode dieser Dioden zur positiven Schiene DCP hin gerichtet ist und die Verbindungsstellen dieser Dioden folgende Knoten ausbilden: Zwischen der dritten D3 und der vierten Diode D4 einen ersten Knoten N1, zwischen der vierten D4 und der fünften Diode D5 einen zweiten Knoten N2 und zwischen der fünften D5 und der sechsten Diode D6 einen dritten Knoten N3.

Ein erster Speicherkondensator C1 ist zwischen die positive Schiene DCP und den ersten Knoten N 1 geschaltet. Ein zweiter Speicherkondensator C2 ist zwischen die negative Schiene DCN und den dritten Knoten N3 geschaltet. Die Dioden D3, D4, D5 und D6 sowie die Speicherkondensatoren C1 und C2 bilden die Valley-Fill-Schaltung. Es handelt sich um eine modifizierte Valley-Fill-Schaltung wie sie im Zusammenhang mit der o. g. Schrift US 6,316,883 (Gyu) erwähnt wurde. Die Dioden D4 und D5 bilden das o.g. aufgespaltete Diodenpaar. An den zwischen den Dioden D4 und D5 gelegenen Knoten N2 ist eine hochfrequente Spannung angelegt, die aus einem Lastkreis ausgekoppelt ist. Damit wird auch in der Valley-Fill-Schaltung in begrenztem Maße die Wirkung einer Ladungspumpe erzielt. In Serie zu den Dioden kann auch ein Widerstand geschaltet sein. Damit werden die Netzstromoberschwingungen weiter reduziert.

Die Serienschaltung zweier elektronischer Schalter T1 und T2 ist zwischen die positive und die negative Schiene DCP und DCN angeschlossen. T1 und T2 bilden einen Halbbrückeninverter, der am Verbindungspunkt von T1 und T2 einen Inverterausgang OUT aufweist. Über die positive und die negative Schiene DCP und DCN bezieht der Halbbrückeninverter Energie. Durch abwechselndes Ein- und Ausschalten von T1 und T2 liegt am Inverterausgang OUT eine hochfrequente Wechselspannung gegenüber der negativen Schiene DCN an. Diese Ausgangsspannung des Inverters weist eine Inverterschwingfrequenz auf, die wesentlich höher ist als Netzfrequenz. Die negative Schiene DCN dient in diesem Fall als Bezugspotenzial zur Definition der Ausgangsspannung des Inverters. Ohne Beschränkung der Allgemeinheit, kann auch die positive Schiene DCP als bezugspotenzial dienen.

T1 und T2 sind im Ausführungsbeispiel als MOSFET ausgeführt. Es können jedoch auch andere elektronische Schalter verwendet werden. An den Gateanschlüssen von T1 und T2 liegt eine Steuerspannung an, die das abwechselnde Ein- und Ausschalten von T1 und T2 bewirkt. Diese Steuerspannung wird von einer Steuerschaltung bereitgestellt, die in der Figur nicht dargestellt ist. Die Steuerschaltung kann entweder einen frei schwingenden Oszillator enthalten, oder vom Lastkreis gesteuert sein, wodurch ein selbstschwingender Halbbrückenwechselrichter gebildet wird.

Am Inverterausgang OUT ist ein Reaktanznetzwerk angeschlossen, dessen Hauptaufgabe es ist, eine Quellimpedanz des Inverterausgangs OUT an eine Lastimpedanz der Lichtquelle anzupassen. Im Ausführungsbeispiel umfasst das Reaktanznetzwerk eine Serienschaltung aus einer Lampendrossel L1, einem Resonanzkondensator C5 und einem Koppelkondensator C6. Diese ist an einem Ende mit dem Inverterausgang OUT verbunden und am anderen Ende mit der positiven Schiene DCP verbunden. Gleichwirkend kann diese Serienschaltung anstatt mit der positive auch mit der negativen Schiene DCN verbunden sein.

Für die prinzipielle Funktion ist Abfolge der Bauelemente in obiger Serienschaltung beliebig. Im Ausführungsbeispiel ist die Lampendrossel Lp mit dem Inverterausgang OUT und der Koppelkondensator C6 ist mit der positiven Schiene DCP verbunden. Der Resonanzkondensator C5 ist zwischen die Lampendrossel L1 und den Koppelkondensator C6 geschaltet.

Der Resonanzkondensator C5 besitzt zwei Anschlüsse, die mit Ausgangsklemmen (J3, J4) verbunden sind, an die eine Lichtquelle (Lp) anschließbar ist. In der Figur ist beispielhaft für eine Lichtquelle eine Leuchtstofflampe dargestellt. Die Schaltungsanordnung kann grundsätzlich aber auch zum Betrieb anderer Lichtquellen wie z. B. Hochdruckentladungslampen, Leuchtdioden oder Glühlampen. Zum Betrieb von Leuchtdioden oder Glühlampen ist ggf. ein Transformator vorzusehen, der die Ausgangsspannung des Inverters an das von den Lichtquellen benötigte Spannungsniveau anpasst. Die in der Figur dargestellte Leuchtstofflampe besitzt zwei Elektrodenwendeln. Jeweils ein Anschluss der Elektrodenwendeln ist mit den Ausgangsklemmen J3 und J4 verbunden. Der jeweils andere Anschluss der Elektrodenwendeln ist über weitere Anschlussklemmen J5 und J6 mit einem weiteren Resonanzkondensator C7 verbunden. Die beiden Resonanzkondensatoren C5 und C7 sind somit über die Elektrodenwendeln verbunden. Damit fließt vor einer Zündung der Lampe Lp ein Vorheizstrom durch die Elektrodenwendeln, was die Lebensdauer der Lampe Lp erhöht.

Es hat sich als besonders vorteilhaft erwiesen, wenn die Lampe Lp über den Koppelkondensator C6 mit der positiven oder negativen Schiene DCP oder DCN verbunden ist. Damit kann die Amplitude der Netzstromoberschwingungen und der Lampenstrom-Crest-Faktor gesenkt werden.

In der Figur ist nur eine Lampe Lp abgebildet. Es ist jedoch auch möglich mehrere Lampen in Serien- oder Parallelschaltung zu betreiben.

Die hochfrequente Wechselspannung, die dem Knoten N2 zugeführt wird, ist im Ausführungsbeispiel dem Potenzial am Anschluss J3 entnommen. Dies entspricht dem Potenzial an einem Anschluss des Resonanzkondensators C5. Der Knoten N2 kann jedoch auch mit anderen Potenzialen verbunden werden, die eine hochfrequente Wechselspannung aufweisen. Z. B. eignet sich dafür der andere Anschluss des Resonanzkondensators C5 oder der Inverterausgang OUT. Die im Ausfühnmgsbeispiel gewählte Variante weist die geringste Amplitude für die Netzstromoberschwingungen und den geringsten Lampenstrom-Crest-Faktor auf.

Die hochfrequente Wechselspannung, die dem Knoten 2 anliegt, liegt auch an einem Pumpkondensator C3 an, der mit dem positiven Gleichrichterausgang POS verbunden ist. Durch die Verbindung des Knotens N2 über den Pumpkondensator C3 mit dem positiven Gleichrichterausgang POS ist eine erste Ladungspumpe realisiert.

Erfindungsgemäß ist der Pumpkondensator C4 zwischen den Knoten N2 und den negativen Gleichrichterausgang NEG geschaltet. Damit ist eine zweite Ladungspumpe am negativen Gleichrichterausgang NEG realisiert. Bevorzugt weisen die beiden Pumpkondensatoren den gleichen Wert auf. Durch die erfindungsgemäße zweite Ladungspumpe ist es möglich, die Amplitude der Netzstrom-Oberschwingungen und den Wert des Lampenstrom-Crest-Faktors zu senken, ohne zwischenzeitliche Speicherung großer Blindleistungsbeträge in den Pumpkondensatoren C3 und C4. Damit bleibt die Belastung der Lampendrossel L1 und der elektronischen Schalter T1 und T2 gering.

## Patentansprüche

1. Schaltungsanordnung zum Betrieb von Lichtquellen mit folgenden Merkmalen:
• Ein Gleichrichter (D7, D8, D9, D10) mit einem Netzspannungseingang (J1, J2), der bei Anlegen einer Netzwechselspannung mit einer Netzfrequenz an seinen Netzspannungseingang an einem positiven (POS) und einem negativen Gleichrichterausgang (NEG) eine gleichgerichtete Netzwechselspannung bereitstellt,
• eine erste Diode (D1), die mit ihrer Anode mit dem positiven Gleichrichterausgang (POS) und mit ihrer Kathode mit einer positiven Schiene (DCP) verbunden ist,
• eine zweite Diode (D2), die mit ihrer Kathode mit dem negativen Gleichrichterausgang (NEG) und mit ihrer Anode mit einer negativen Schiene (DCN) verbunden ist,
• eine dritte (D3), eine vierte (D4), eine fünfte (D5) und eine sechste Diode (D6), die in Serie zwischen die positive (DCP) und die negative Schiene (DCN) geschaltet sind, wobei jeweils die Kathode dieser Dioden (D3, D4, D5, D6) zur positiven Schiene (DCP) hin gerichtet ist und die Verbindungsstellen dieser Dioden (D3, D4, D5, D6) folgende Knoten ausbilden: Zwischen der dritten (D3) und der vierten Diode (D4) einen ersten Knoten (N 1), zwischen der vierten (D4) und der fünften Diode (D5) einen zweiten Knoten (N2) und zwischen der fünften (D5) und der sechsten Diode (D6) einen dritten Knoten (N3),
• einen ersten (C1) und einen zweiten Speicherkondensator (C2), wobei der erste Speicherkondensator (C1) zwischen die positive Schiene (DCP) und den ersten Knoten (N1) und der zweite Speicherkondensator (C2) zwischen die negative Schiene (DCN) und den dritten Knoten (N3) geschaltet ist,
• ein Inverter (T1, T2), der zur Energieversorgung an die positive (DCP) und die negative Schiene (DCN) angeschlossen ist und an einem Inverterausgang (OUT) gegenüber der negativen Schiene (DCN) eine Inverterausgangsspannung bereitstellt, die eine Inverterschwingfrequenz aufweist, die wesentlich höher ist als Netzfrequenz,
• ein Reaktanznetzwerk, das an den Inverterausgang (OUT) angeschlossen ist, und Ausgangsklemmen (J3, J4) zum Anschluss von Lichtquellen bereitstellt,
• eine Kopplung zwischen dem Reaktanznetzwerk und dem Knoten (N2), der am Knoten (N2) gegenüber der negativen Schiene (DCN) einen Spannungsverlauf bewirkt, der die Inverterschwingfrequenz aufweist,
• einen ersten Pumpkondensator (C3), der mit dem Knoten (N2) und dem positiven Gleichrichterausgang (POS) verbunden ist,
**dadurch gekennzeichnet, dass**
die Schaltungsanordnung einen zweiten Pumpkondensator (C4) aufweist, wobei der zweite Pumpkondensator (C4) mit dem Knoten (N2) und dem negativen Gleichrichterausgang (NEG) verbunden ist.

2. Schaltungsanordnung zum Betrieb von Lichtquellen gemäß Anspruch 1, **gekennzeichnet durch** folgende Merkmale:
• Das Reaktanznetzwerk umfasst eine Serienschaltung aus einer Lampendrossel (L1), einem Resonanzkondensator (C5) und einem Koppelkondensator (C6),
• die Serienschaltung ist an einem Ende mit dem Inverterausgang (OUT) verbunden und am anderen Ende mit der positiven (DCP) oder der negativen Schiene (DCN) verbunden,
• der Resonanzkondensator (C5) besitzt zwei Anschlüsse, die mit Ausgangsklemmen (J3, J4) verbunden sind, an die eine Lichtquelle (Lp) anschließbar ist,
• ein Anschluss des Resonanzkondensators (C5) ist mit dem zweiten Knoten (N2) verbunden.

3. Schaltungsanordnung zum Betrieb von Lichtquellen gemäß Anspruch 2, **gekennzeichnet durch** folgende Merkmale:
• die Lampendrossel (Lp) ist mit dem Inverterausgang verbunden,
• der Koppelkondensator (C6) ist mit der positiven (DCP) oder der negativen Schiene (DCN) verbunden,
• der Resonanzkondensator (C5) ist zwischen die Lampendrossel (L1) und den Koppelkondensator (C6) geschaltet
• der dem Koppelkondensator (C6) zugewandte Anschluss des Resonanzkondensators (C5) ist mit dem zweiten Knoten (N2) verbunden.

4. Schaltungsanordnung zum Betrieb von Lichtquellen gemäß Anspruch 2, **dadurch gekennzeichnet, dass**
die Lichtquelle (Lp) eine Gasentladungslampe mit zwei Elektrodenwendeln ist und ein zweiter Resonanzkondensator (C7) über die Elektrodenwendeln mit dem Resonanzkondensator (C5) aus Anspruch 2 verbunden ist.

5. Schaltungsanordnung von Betrieb von Lichtquellen gemäß Anspruch 1,
**dadurch gekennzeichnet, dass**
die Lichtquelle (Lp) eine Gasentladungslampe ist.

6. Schaltungsanordnung zum Betrieb von Lichtquellen gemäß Anspruch 1,
**dadurch gekennzeichnet, dass**
der Inverter ein Halbbrückeninverter ist, der eine Serienschaltung von zwei elektronischen Schaltern (T1, T2) umfasst, die zwischen die positive (DCP) und die negative Schiene (DCN) geschaltet sind und der Inverterausgang (OUT) der Verbindungspunkt der beiden elektronischen Schalter (T1, T2) ist.

## Claims

1. Circuit arrangement for operating light sources having the following features:
• a rectifier (D7, D8, D9, D10) having a system voltage input (J1, J2) which, when a system AC voltage at a system frequency is applied at its system voltage input, provides a rectified system AC voltage at a positive (POS) and a negative rectifier output (NEG),
• a first diode (D1) which is connected at its anode to the positive rectifier output (POS) and at its cathode to a positive busbar (DCP),
• a second diode (D2) which is connected at its cathode to the negative rectifier output (NEG) and at its anode to a negative busbar (DCN),
• a third (D3), a fourth (D4), a fifth (D5) and a sixth diode (D6) which are connected in series between the positive (DCP) and the negative busbar (DCN), in each case the cathode of these diodes (D3, D4, D5, D6) being directed towards the positive busbar (DCP), and the connection points of these diodes (D3, D4, D5, D6) forming the following nodes: a first node (N1) between the third (D3) and the fourth diode (D4), a second node (N2) between the fourth (D4) and the fifth diode (D5), and a third node (N3) between the fifth (D5) and the sixth diode (D6),
• a first (C1) and a second storage capacitor (C2), the first storage capacitor (C1) being connected between the positive busbar (DCP) and the first node (N1), and the second storage capacitor (C2) being connected between the negative busbar (DCN) and the third node (N3),
• an inverter (T1, T2), which is connected to the positive (DCP) and the negative busbars (DCN) for the purpose of supplying power and provides an inverter output voltage at an inverter output (OUT) opposite the negative busbar (DCN), said voltage having an inverter oscillating frequency which is substantially higher than the system frequency,
• a reactance network which is connected to the inverter output (OUT) and provides output terminals (J3, J4) for connecting light sources,
• a coupling between the reactance network and the node (N2) which brings about a voltage waveform at the node (N2) opposite the negative busbar (DCN) which has the inverter oscillating frequency,
• a first pump capacitor (C3) which is connected to the node (N2) and the positive rectifier output (POS),
**characterized in that**
the circuit arrangement has a second pump capacitor (C4), the second pump capacitor (C4) being connected to the node (N2) and the negative rectifier output (NEG).

2. Circuit arrangement for operating light sources according to Claim 1, **characterized by** the following features:
• the reactance network comprises a series circuit comprising a lamp inductor (L1), a resonant capacitor (C5) and a coupling capacitor (C6),
• the series circuit is connected at one end to the inverter output (OUT) and at the other end to the positive (DCP) or the negative busbar (DCN),
• the resonant capacitor (C5) has two connections which are connected to output terminals (J3, J4) to which a light source (Lp) can be connected,
• one connection of the resonant capacitor (C5) is connected to the second node (N2).

3. Circuit arrangement for operating light sources according to Claim 2, **characterized by** the following features:
• the lamp inductor (L1) is connected to the inverter output,
• the coupling capacitor (C6) is connected to the positive (DCP) or the negative busbar (DCN),
• the resonant capacitor (C5) is connected between the lamp inductor (L1) and the coupling capacitor (C6),
• the connection of the resonant capacitor (C5) which faces the coupling capacitor (C6) is connected to the second node (N2).

4. Circuit arrangement for operating light sources according to Claim 2,
**characterized in that**
the light source (Lp) is a gas discharge lamp having two electrode filaments, and a second resonant capacitor (C7) is connected to the resonant capacitor (C5) from Claim 2 via the electrode filaments.

5. Circuit arrangement for operating light sources according to Claim 1,
**characterized in that**
the light source (Lp) is a gas discharge lamp.

6. Circuit arrangement for operating light sources according to Claim 1,
**characterized in that**
the inverter is a half-bridge inverter which comprises a series circuit comprising two electronic switches (T1, T2) which are connected between the positive (DCP) and the negative busbars (DCN), and the inverter output (OUT) is the connection point of the two electronic switches (T1, T2).

## Revendications

1. Circuit pour faire fonctionner des sources lumineuses, ayant les caractéristiques suivantes :
• un redresseur (D7, D8, D9, D10) avec une entrée de tension de réseau (J1, J2) qui fournit une tension alternative de réseau redressée à une sortie de redresseur positive (POS) et à une sortie de redresseur négative (NEG) lors de l'application d'une tension alternative de réseau avec une certaine fréquence de réseau à son entrée de tension de réseau,
• une première diode (D1) qui est reliée par son anode à la sortie de redresseur positive (POS) et par sa cathode à une barre positive (DCP),
• une deuxième diode (D2) qui est reliée par sa cathode à la sortie de redresseur négative (NEG) et par son anode à une barre négative (DCN),
• une troisième diode (D3), une quatrième diode (D4), une cinquième diode (D5) et une sixième diode (D6) qui sont branchées en série entre la barre positive (DCP) et la barre négative (DCN), la cathode de chacune de ces diodes (D3, D4, D5, D6) étant orientée vers la barre positive (DCP) et les points de jonction de ces diodes (D3, D4, D5, D6) formant les noeuds suivants : un premier noeud (N1) entre la troisième (D3) et la quatrième diode (D4), un deuxième noeud (N2) entre la quatrième (D4) et la cinquième diode (D5) et un troisième noeud (N3) entre la cinquième (D5) et la sixième diode (D6),
• un premier condensateur de stockage (C1) et un deuxième condensateur de stockage (C2), le premier condensateur de stockage (C1) étant branché entre la barre positive (DCP) et le premier noeud (N1) et le deuxième condensateur de stockage (C2) étant branché entre la barre négative (DCN) et le troisième noeud (N3),
• un inverseur (T1, T2) qui est raccordé pour l'alimentation en énergie à la barre positive (DCP) et à la barre négative (DCN) et qui fournit à une sortie d'inverseur (OUT) par rapport à la barre négative (DCN) une tension de sortie d'inverseur qui a une fréquence d'oscillation d'inverseur qui est nettement supérieure à la fréquence de réseau,
• un réseau à réactance qui est raccordé à la sortie d'inverseur (OUT) et qui met à disposition des bornes de sortie (J3, J4) pour le raccordement de sources lumineuses,
• un couplage entre le réseau à réactance et le noeud (N2) qui produit au noeud (N2), par rapport à la barre négative (DCN), une allure de tension qui a la fréquence d'oscillation d'inverseur,
• un premier condensateur de pompage (C3) qui est relié au noeud (N2) et à la sortie de redresseur positive (POS),
**caractérisé par le fait que**
le circuit comporte un deuxième condensateur de pompage (C4), le deuxième condensateur de pompage (C4) étant relié au noeud (N2) et à la sortie de redresseur négative (NEG).

2. Circuit pour faire fonctionner des sources lumineuses selon la revendication 1,
**caractérisé par** les caractéristiques suivantes :
• le réseau à réactance comprend un circuit série composé d'une self de lampe (L1), d'un condensateur de résonance (C5) et d'un condensateur de couplage (C6),
• le circuit série est relié par une extrémité à la sortie d'inverseur (OUT) et par l'autre extrémité à la barre positive (DCP) ou à la barre négative (DCN),
• le condensateur de résonance (C5) comporte deux bornes qui sont reliées aux bornes de sortie (J3, J4) auxquelles une source lumineuse (Lp) peut être raccordée,
• une borne du condensateur de résonance (C5) est reliée au deuxième noeud (N2).

3. Circuit pour faire fonctionner des sources lumineuses selon la revendication 2,
**caractérisé par** les caractéristiques suivantes :
• la self de lampe (Lp) est reliée à la sortie d'inverseur,
• le condensateur de couplage (C6) est relié à la barre positive (DCP) ou à la barre négative (DCN),
• le condensateur de résonance (C5) est branché entre la self de lampe (L1) et le condensateur de couplage (C6),
• celle des bornes du condensateur de résonance (C5) qui est proche du condensateur de couplage (C6) est reliée au deuxième noeud (N2).

4. Circuit pour faire fonctionner des sources lumineuses selon la revendication 2,
**caractérisé par le fait que** la source lumineuse (Lp) est une lampe à décharge avec deux électrodes et qu'un deuxième condensateur de résonance (C7) est relié par l'intermédiaire des électrodes au condensateur de résonance (C5) de la revendication 2.

5. Circuit pour faire fonctionner des sources lumineuses selon la revendication 1,
**caractérisé par le fait que** la source lumineuse (Lp) est une lampe à décharge gazeuse.

6. Circuit pour faire fonctionner des sources lumineuses selon la revendication 1,
**caractérisé par le fait que** l'inverseur est un inverseur à demi-pont qui comprend un circuit série composé de deux interrupteurs électroniques (T1, T2) qui sont branchés entre la barre positive (DCP) et la barre négative (DCN) et que la sortie d'inverseur (OUT) est le point de jonction des deux interrupteurs électroniques (T1, T2).
